# EUROPÄISCHE PATENTSCHRIFT

(11) **EP 2 080 033 B1**
(45) Veröffentlichungstag und Bekanntmachung des Hinweises auf die Patenterteilung: **13.06.2012**
(21) Anmeldenummer: 06840862.4
(22) Anmeldetag: 17.10.2006
(51) Int. Cl.: G01S 5/02, G01S 3/14, G01S 3/10, G05D 1/02

(54) **NAVIGATIONSEINRICHTUNG UND VERFAHREN ZUM ERMITTELN VON ORIENTIERUNGEN**
NAVIGATION DEVICE AND METHOD FOR ACQUIRING ORIENTATIONS
DISPOSITIF DE NAVIGATION ET PROCÉDÉ POUR LA DÉTERMINATION D'ORIENTATIONS

(43) Veröffentlichungstag der Anmeldung: 22.07.2009
(73) Patentinhaber: Kramer, Günter, 38159 Vechelde (DE)
(72) Erfinder: Kramer, Günter, 38159 Vechelde (DE)
(74) Vertreter: Lemcke, Brommer & Partner
(86) Internationale Anmeldenummer: PCT/DE2006/001836
(87) Internationale Veröffentlichungsnummer: WO 2008/046363

(56) Entgegenhaltungen:
- EP-A- 0 087 333
- GB-A- 2 246 041
- US-A- 4 967 981
- US-A- 5 146 231
- US-A- 5 572 217
- US-A1- 2004 220 722

## Beschreibung

Die Erfindung betrifft eine Navigationseinrichtung nach Anspruch 1 für ein Objekt, insbesondere ein Flugzeug, Land- oder Wasserfahrzeug, aufweisend eine Rechen- und Steuerungseinheit und einen Funkpeiler mit einer Hochfrequenzfeld-Sondenanordnung zum Anpeilen von Funksendern, die Hochfrequenzwellen ausstrahlen.

Weiterhin betrifft die Erfindung ein Verfahren nach Anspruch 8 zum Ermitteln der Orientierung oder Änderung der Orientierung mindestens einer Achse eines Objekts, beispielsweise eines Flugzeugs, Land- oder Wasserfahrzeugs, in einem geodätischen Bezugssystem sowie die Verwendung einer Navigationseinrichtung der eingangs genannten Art zum Ermitteln der Orientierung oder Änderung der Orientierung mindestens einer Achse eines Objekts, beispielsweise eines Flugzeugs, Land- oder Wasserfahrzeugs, in einem geodätischen Bezugssystem.

Navigationseinrichtungen der vorstehend genannten Art werden nach dem Stand der Technik dazu genutzt, die Position und/oder den Weg eines Objekts, insbesondere eines beweglichen oder bewegten Objekts, wie eines Fahrzeugs, zu bestimmen.

Bei der Sicht- und Koppelnavigation werden insbesondere Magnetkompasse zur Bestimmung des Steuerkurses eingesetzt, wogegen Funknavigationsgeräte üblicherweise zur Bestimmung der Position, d.h. zur Ortung eines Objekts oder Fahrzeugs eingesetzt werden. Dabei werden Funksender angepeilt, die als Funkfeuer gerichtete oder ungerichtete Wellen ausstrahlen können. Weiterhin kann bei der Satellitennavigation mit einem Satellitenortungs-Signalempfänger aus der Laufzeit von Satellitensignalen die Entfernung zu mindestens vier Satelliten und hieraus ein dreidimensionaler Standort errechnet werden. Zur Satellitenortung stehen derzeit das GPS- und das Glonass- und zukünftig das Galileo-System zur Verfügung.

So ist beispielsweise aus der DE 35 373 730 C2 eine Vorrichtung zur automatischen Kursbestimmung eines Wasserfahrzeugs bekannt, bei der nach dem Verfahren der Eigenpeilung eine Position relativ zu mindestens einem Sender feststellt wird. Bei bekannten Standortkoordinaten des Senders ist auf diese Weise eine Bestimmung des Standorts, das heißt eine Positionsbestimmung des bewegten Objekts möglich. Mit dem so ermittelten Ort wird der zum Erreichen eines Zielortes erforderliche Soll-Kurs ermittelt.

Die DE 20 27 987 A beschreibt ein Verfahren zur kontinuierlichen automatischen Anzeige der Einfallsrichtung von Funkwellen und offenbart zu diesem Zweck speziell vorbekannte Funkpeiler, bei denen zur Ermittlung der Einfallsrichtung von Funkwellen im Gegensatz zu noch älteren Funkpeilern keinerlei Hochfrequenzbauteile, wie drehbare Antennen oder Goniometer, mechanisch bewegt werden müssen.

Die DE 26 04 102 A1 offenbart ein Navigationsinstrument, mit dessen Hilfe die Messung von Horizontalwinkeln und/oder das Orten mit größerer Genauigkeit und in bequemerer Weise als bisher durchführbar sein soll. Hierzu ist vorgesehen, eine Funkpeilanlage mit einem Magnetkompass zu kombinieren, mit dessen Hilfe die Peilung zu Funkfeuern konventionell gemessen wird, wozu der Magnetkompass ein besonders ausgebildetes Gehäuse besitzt.

Zur Feststellung nicht nur der Position (Ortung) eines Objekts, wie bei dem vorstehend genannten Stand der Technik, sondern auch von dessen momentaner Orientierung hinsichtlich wenigstens einer Achse, beispielsweise der Bugrichtung eines Schiffes in Bezug auf die Himmelsrichtung, sind Magnetkompasse hinreichend bekannt. Ein Magnetkompass nutzt das Magnetfeld der Erde. So stellt sich bei einem Magnetkompass eine Kompassmagnetnadel entlang der Feldlinien des Erdmagnetfeldes ein. Dabei ist jedoch zu berücksichtigen, dass die Magnetfeldlinien nur am magnetischen Äquator parallel zur Erdoberfläche verlaufen, in hohen Breiten dagegen unter einem mehr oder weniger steilen Winkel, Inklination genannt, in die Erdoberfläche ein- oder austreten. An den Magnetpolen stehen die Magnetfeldlinien senkrecht zur Erdoberfläche.

Nachdem den Navigator regelmäßig die Horizontal-Komponente der Richtung der Magnetfeldlinien interessiert, ist es notwendig, die Feldlinien auf die Horizontalebene zu projizieren. Dieses setzt die Kenntnis der Lotrichtung voraus, die üblicherweise mittels eines Gewichtes aus der Schwerebeschleunigung (Gravitationsbeschleunigung) gewonnen wird. Derartige Anordnungen sind jedoch prinzipiell empfindlich gegen kinematische Beschleunigungen, wie sie etwa bei Schiffen aus der Wellenbewegung resultieren können, indem sie nur das Scheinlot ermitteln, nicht aber das für eine korrekte Projektion erforderliche wahre Lot zum Mittelpunkt der Erde.

Dasselbe Problem besteht bei so genannten Fluxgate-Kompassen, wie sie beispielsweise in der GB 1 346 190 offenbart sind, bei denen das Erdmagnetfeld mit einer Gleichfeldsonde (Förstersonde, Fluxgate-Sonde) gemessen wird. Derartige Kompassanordnungen sind üblicherweise zweiachsig und müssen zur Richtungsbestimmung waagerecht gehalten werden, oder sie sind kardanisch aufgehängt, was aufwändig ist und entsprechende Kostennachteile bedingt.

Bekannt sind auch relativ zum dem Objekt fest angeordnete Sensoranordnungen (im Folgenden auch als "plattformfeste" Sensoranordnungen bezeichnet) zur Messung des Erdmagnetfelds, bei denen drei Gleichfeldsonden alle drei Komponenten des erdmagnetischen Feldes in einem bezüglich des Objekts festen (objekt festen oder "plattformfesten") Koordinatensystem messen. Durch Ermittlung der Richtung der Erdbeschleunigung in demselben System kann die Orientierung des Objekts errechnet werden, sofern die Erdbeschleunigung als reine Gravitationsbeschleunigung zum Erdmittelpunkt gerichtet und nicht durch translatorische kinematische Beschleunigungen verfälscht ist.

Die Beeinflussung von Magnetkompassen, beispielsweise auf Schiffen durch den Seegang, ist in höheren geografischen Breiten wegen der mit der Breite zunehmenden Inklination besonders stark. So führt eine Inklination von 60° an der Ostsee dazu, dass eine kleine Ablenkung des Lots eine doppelt so große Ablenkung der Kompassanzeige zur Folge hat. Beispielsweise können bei einer Inklination in dieser Größenordnung Schwerewellen (Dünung) mit 2 m Wellenhöhe den Magnetkompass eines kleinen Bootes schon um ca. 50° hin und her pendeln lassen. Das Steuern mit einem derart gestörten Kompass ist ohne Zusatzinformationen nahezu unmöglich. Ein erfahrener Rudergänger erkennt allerdings Gierbewegungen des Fahrzeugs optisch an der Textur der Wasseroberfläche auch ohne festes Peilobjekt am Horizont oder Himmel. Durch Beobachtung des unregelmäßigen Wellenbildes kann er die Drehbewegungen des eigenen Schiffes abschätzen und das Schiff auf ziemlich konstantem Kurs halten. Dabei wird er den Kompass nur sporadisch ablesen und eine eventuelle notwendige Kurskorrektur unter Augenkontrolle mit Blick auf Wellen oder Wolken vornehmen. Bei Nebel, in totaler Finsternis oder für eine Selbststeueranlage ist die Steuerung des Schiffes ausschließlich nach dem Kompasskurs entsprechend schwierig und fehlerbehaftet.

Bei einem Landfahrzeug lässt sich die Anzeige eines Kompasses verbessern, indem aus den Signalen der Radsensoren auf den kinematischen Anteil der Beschleunigung geschlossen und dieser entsprechend berücksichtigt wird. In der DE 195 32 122 C1 ist ein solches integriertes System beschrieben, das die kinematischen Beschleunigungen soweit wie möglich rechnerisch eliminiert. Bei Beschleunigungen durch Wasserwellen oder in einem Luftfahrzeug ist ein derartiges Vorgehen nachteiliger Weise nicht möglich.

Weiterhin sind, beispielsweise aus der DE 198 16 924 C2, Kreiselkompasse bekannt, bei denen mit mindestens einem schnell rotierenden Kreisel die Lage der Drehachse des Kreisels im Raum festgelegt wird. Wenn die Drehachse so gelagert ist, dass sie sich nur in der Horizontalebene bewegen kann, stellt sich die Drehachse den Kreiselgesetzen folgend in die Richtung des geografischen Meridians ein. Durch weitere Kreisel können Fehler durch Plattformbewegungen beseitigt werden. Derartige Navigationsgeräte kommen jedoch wegen ihrer mechanisch aufwändigen Konstruktion für kleine Fahrzeuge kaum in Betracht.

In der EP 0 532 332 B1 ist ein mobiler Funkpeiler zum Aufspüren eines fernen Funksenders beschrieben, bei dem die Signale eines Kompasses mit den Signalen eines Funkpeilers kombiniert in einem Glättungsfilter ausgewertet werden. Die Glättung soll dort die Fehler der Funkpeilung reduzieren, die von Reflektionen der Funkwellen an festen Urngebungsstrukturen verursacht werden und die bei bewegtem Peiler einen statistischen Charakter annehmen. Dabei wird der Kompass als ideale Referenz angesehen. Wie oben dargelegt wurde, sind jedoch gerade die Kompassinformationen aufgrund von Beschleunigungen einem schwankenden Fehler unterworfen.

Aus der US2004/0220722 A1 ist ein Funknavigationssystem für Flugzeuge bekannt. Dort werden mit einer Richtantenne und einem Funkempfänger die Signale mehrerer Funksender bekannter Ortsposition angepeilt und zur Bestimmung des Flugzeugkurses ausgewertet. In diesem Zusammenhang können insbesondere bei Empfang von weniger als drei Funksendern zusätzliche Positions- und Richtungsinformationen, beispielsweise von einem Kompass, Verwendung finden.

In der EP 1 102 084 B1 ist ein Verfahren zur Bestimmung einer definierten azimutalen Richtung einer Plattform beschrieben, bei dem die Orientierung mittels Radiosignalen ohne Magnetkompass bestimmt wird. Hierzu werden von speziellen Drehfunkfeuern Funksignale ausgesendet, die eine Winkelinformation zur Nordrichtung beinhalten. Das Verfahren funktioniert jedoch nur in Verbindung mit speziell dafür eingerichteten Sendern, nicht hingegen mit der Mehrzahl vorhandener leistungsstarker (Rund-)Funksender, die Musik- oder Sprachsignale übertragen.

Aufgabe der Erfindung ist es, eine verbesserte und vereinfachte Navigationsein-richtung sowie ein Verfahren zum Ermitteln der Orientierung oder Änderung der Orientierung mindestens einer Achse eines Objekts in einem geodätischen Bezugssystem anzugeben, mit der sich die Orientierung oder Änderung der Orientierung der mindestens einen Achse des Objekts ermitteln lässt, ohne dass das Messergebnis durch Translations-Beschleunigungen verfälscht wird.

Gemäß einem ersten Aspekt der vorliegenden Erfindung wird die Aufgabe bei einer Navigationseinrichtung der eingangs genannten Art dadurch gelöst, dass zum Ermitteln der Orientierung oder Änderung der Orientierung mindestens einer Achse des Objekts in einem geodätischen Bezugssystem der Funkpeiler zum Bestimmen der Einfallsrichtung wenigstens einer von einem Funksender ausgestrahlten Hochfrequenzwelle durch Ermittlung einer Feldrichtung der Höchfrequenzwelle relativ zu einer ausgezeichneten objektfesten Achse in Form von richtungsabhängigen Messdaten ausgebildet ist und dass die Rechen- und Steuerungseinheit zum Umrechnen der richtungsabhängigen Messdaten zwischen einem objektfesten und dem geodätischen Bezugssystem zum Bestimmen einer Winkellage der Achse in dem geodätischen Bezugssystem ausgebildet ist.

Bei der erfindungsgemäßen Navigationseinrichtung wird die Tatsache ausgenutzt, dass die Messung der Richtung bzw. Ausrichtung elektromagnetischer Felder nicht durch kinematische Translations-Beschleunigung verfälscht ist. Außerdem wird bei der erfindungsgemäßen Navigationseinrichtung die zwar an sich bekannte, aber bislang vernachlässigte Tatsache ausgenutzt, dass die magnetischen Felder der von Funksendern ausgesandten Hochfrequenzwellen, insbesondere bei Langwellen, in der Horizontalebene liegen. Bei den üblichen senkrechten Sendemasten gilt dies nicht nur im Fernfeld, sondern sogar auch im Nahfeld.

Gemäß einem zweiten Aspekt der vorliegenden Erfindung wird die Aufgabe gelöst durch ein Verfahren der eingangs genannten Art mit den Schritten:
- Bestimmen einer Einfallsrichtung einer von wenigstens einem Funksender ausgestrahlten Hochfrequenzwelle durch Ermittlung einer Feldrichtung der Hochfrequenzwelle relativ zu einer ausgezeichneten objektfesten Achse in Form von richtungsabhängigen Messdaten mittels eines Funkpeilers,
- Umrechnen der von dem Funkpfeiler gelieferten richtungsabhängigen Messdaten zwischen einem objektfesten und dem geodätischen Bezugssystem durch eine Rechen- und Steuerungseinheit und
- Bestimmen einer Winkellage der Achse in dem geodätischen Bezugssystem anhand der Messdatenumrechnung.

Gemäß einem dritten Aspekt der vorliegenden Erfindung wird die Aufgabe auch gelöst durch eine Verwendung einer Navigationseinrichtung, die einen Funkpeiler mit einer Hochfrequenz-Sondenanordnung zum Anpeilen von Funksendern, die Hochfrequenzwellen ausstrahlen, und eine Rechen- und Steuerungseinheit zum Auswerten von dem Funkpeiler gelieferter Messdaten aufweist, zum Ermitteln der Orientierung oder Änderung der Orientierung mindestens einer Achse eines Objekts, beispielsweise eines Flugzeugs, Land- oder Wasserfahrzeugs, in einem geodätischen Bezugssystem, indem durch den Funkpeiler eine Einfallsrichtung der von wenigstens einem Funksender ausgestrahlten Hochfrequenzwelle durch Ermittlung einer Feldrichtung der Hochfrequenzwelle relativ zu der Achse in Form von richtungsabhängigen Messdaten bestimmt wird, indem die richtungsabhängigen Messdaten zwischen einem objektfesten und dem geodätischen Bezugssystem durch die Rechen- und Steuerungseinheit umgerechnet werden und indem aus der Messdatenumrechnung wenigstens eine Winkellage der Achse in dem geodätischen Bezugssystem bestimmt wird.

Nachfolgend seien zunächst einige für das Verständnis der vorliegenden Erfindung relevante Begriffe kurz erläutert:

Wie in der Kritik am Stand der Technik beschrieben, soll ein Kompass den rechtweisenden Kurs des Objekts (oder auch eines Fahrzeugs oder einer Plattform) bestimmen. Das bedeutet normalerweise den (azimutalen) Winkel zwischen geodätischer Nordrichtung und einer Objektachse, z.B. der Bugrichtung eines Fahrzeugs, die einen Schätzwert für die Bewegungsrichtung (Translation) darstellt.

Die Bestimmung der vollständigen Orientierung erfordert hingegen die Bestimmung zweier weiterer Winkel (Skalare), wofür in der Luftfahrt die Namen Roll- und Nickwinkel üblich sind. Für die genauen Definitionen, insbesondere der zugehörigen Bezugsrichtungen (Nullpunkte), wird auf entsprechende Lehrbücher bzw. das Wissen des Fachmanns verwiesen. Aus der vollständigen Orientierung (Winkellage) lassen sich alle skalaren Winkelgrößen errechnen, insbesondere auch der Kurs nach der o.a. Definition.

Vorliegend wird der Begriff "Orientierung" für die vollständig beschriebene Winkellage eines Objekts in Abgrenzung zu dessen "Position" verwendet. "Translation" ist eine Veränderung der Position, "Drehung" hingegen ist eine Veränderung der Orientierung oder auch die mathematische Operation, die ein Achsen- oder Bezugssystem in ein anderes überführt. Die entsprechende Drehung ist dann ein Tensor, dessen Elemente sich z.B. in Form der Eulerschen Winkel ausdrücken lassen.

Die der Erfindung zugrunde liegende Erkenntnis ist die, dass die unsinnigen Ruderbewegungen, welche die Selbststeueranlage eines Schiffes beispielsweise in Seegang ausführt, vom Zusammenwirken zweier besonderer Gegebenheiten herrühren, mit denen ein Schiffskompass insbesondere in nördlichen (und entsprechend in südlichen) Breiten fertig werden muss: Dies sind einerseits die große Inklination des geomagnetischen Feldes und andererseits die Translationsbeschleunigungen, denen er gerade auf einem kleinen bewegten Objekt, wie einem kleinen Luft- oder Wasserfahrzeug, ausgesetzt ist. Letztere machen die Bestimmung der Lotrichtung mit einer einfachen Pendelanordnung unmöglich, wie oben bereits detailliert ausgeführt wurde.

Hiervon ausgehend basiert die vorliegende Erfindung auf der Einsicht, dass nur das Zusammenwirken der beiden beschriebenen Störeinflüsse (Inklination bzw. Translationsbeschleunigung) ein Problem verursacht und es somit genügt, einen davon auszuschalten.

Entsprechend schlägt die vorliegende Erfindung im Zuge bestimmter Ausgestaltungen vor, zum Zwecke der Ermittlung zumindest einiger der die Orientierung eines Objektes beschreibenden Größen oder der Änderung derselben die Tatsache auszunutzen, dass die Magnetfelder insbesondere von Langwellen bekanntermaßen horizontal verlaufen und von Beschleunigungen unbeeinflusst vermessen werden können.

Die Hochfrequenzwelle (Langwelle), d.h. das lokale ebene elektromagnetische Wellenfeld wird vollständig beschrieben durch Beschreibung der drei E-Feld-Komponenten und der drei H-Feld-Komponenten als Funktionen der drei Ortskoordinaten und der Zeit. Außer der Einfallsrichtung, Amplitude und Frequenz gehört zu den Beschreibungsparametern auch die Polarisation. Langwellen sind linear polarisiert (E-Feld vertikal) und breiten sich als Grenzflächenwellen entlang der Erdoberfläche aus. Deshalb liegen ihre Magnetfelder immer in der Horizontalebene und natürlich senkrecht zur Ausbreitungsrichtung. Aus der lokalen Richtung des HF-Magnetfeldes kann man die Einfallsrichtung nur modulo 180° bestimmen. Diese Ambiguität lässt sich dann anhand des (gleichphasigen) vertikalen elektrischen Feldes auflösen, was dem Fachmann geläufig ist.

Gemäß einer grundlegenden Ausgestaltung der Erfindung genügt in diesem Zusammenhang bereits das Anpeilen eines einzigen Funksenders. Zwar ermöglicht dieses noch nicht die Bestimmung der vollständigen Orientierung des Objekts; allerdings reicht dafür auch das Erdmagnetfeld allein nicht aus. Anders als Letzteres ist das HF-Feld insbesondere eines Langwellensenders jedoch horizontal - wie vorstehend erläutert - und hat keine Inklination. Deswegen ist die erfindungsgemäße Peilung nur eines Funksenders ebenso nützlich wie eine Bestimmung des Erdfelds am Äquator, d. h. sie bietet eine stabile Bezugsrichtung, die nicht erst in die Horizontalebene gelotet werden muss, um beispielsweise den Kurs zu bestimmen. Bei Kenntnis der sich regelmäßig höchstens langsam ändernden Richtung von Objekt oder Fahrzeug zum Sender lässt sich dieser aus dem Winkel zwischen einer Achse des Objekts, z.B. der Bugrichtung, und der Peilrichtung bestimmen. Unbekannte Krängung verursacht dabei höchstens einen (tolerierbaren) Kosinusfehler, wie weiter unten noch detailliert erläutert wird.

Bei einer weiteren Ausgestaltung der Erfindung erfolgt zum Bestimmen der vollständigen Orientierung die räumliche Peilung von mindestens zwei Funksendern, um die Horizontalebene eindeutig festzulegen.

Wird ein und dieselbe (Feld-)Richtung in beiden Systemen, d.h. dem geodätischen und dem objektfesten Bezugssystem beschrieben, so lässt sich daraus ein Drehungstensor berechnen, der das eine System in das andere überführt. (Tatsächlich benötigt man hierzu mehr als eine Richtung, nämlich drei skalare Freiheitsgrade oder 1½ Richtungen. Mit zwei Richtungen ist der Tensor bereits über bestimmt, da der skalare Winkel zwischen den beiden Richtungen in beiden Systemen derselbe sein muss.) Der Drehungstensor beschreibt genau die vollständige Winkellage oder Orientierung.

Andererseits handelt es sich auch bei dem geomagnetischen Feld um ein elektromagnetisches Feld. Genau wie die Funkwellen lässt es sich (in Abhängigkeit vom Ort des Objekts) im geodätischen Bezugssystem beschreiben, und es kann lokal im Objektsystem (objektfestes Bezugssystem) gemessen werden. Die Messergebnisse von Funkpeiler und Gleichfeld- oder Magnetfeldsonde ergänzen sich somit und lassen sich auf vielfältige Weise kombinieren:

Eine leicht beschreibbare Art gemäß einer weiteren Ausgestaltung der vorliegenden Erfindung ist eine solche, bei der beispielsweise mittels eines üblichen Fluxgate-Kompasses (d.h. einer kardanisch aufgehängten 2-Achs-Magnetfeldsonde) der im Mittel ziemlich richtige Kurs bestimmt und dieser kurzzeitig an einem Funkpeiler - ggf. bei Empfang lediglich eines Funksenders - abgestützt wird. Während der Funkpeiler hierbei nur konstante oder langsam veränderliche Fehler aufweist, weist der Kompassfehler überwiegend von Schwankungen des Scheinlots herrührende schnelle Schwankungen auf, die sich weitgehend durch Mittelung beseitigen lassen.

Allgemeiner gesagt stellt also das Erdfeld eine Bezugsrichtung dar, die sich wie die Wellenfelder der Funksender im geodätischen Koordinatensystem beschreiben und im Objektsystem messen lässt. Dagegen reicht ein räumlicher Gleichfeld-Sensor nicht zur vollständigen Bestimmung der Orientierung aus, da das Ergebnis bezüglich einer Drehung um die Magnetfeldrichtung unbestimmt bleibt. Wenn man diese Unbestimmtheit nicht unter Zuhilfenahme des Gravitationsfeldes auflösen kann, genügt hierfür eine einzelne andere Bezugsrichtung, nämlich die Richtung eines HF-Magnetfelds, wie sie erfindungsgemäß bestimmt wird. Der Funkpeiler ersetzt somit teure und aufwändige Gyro-Sensoren, die sonst zur Stabilisierung des Kompasses herangezogen werden müssten.

Dies erklärt sich einfach dadurch, dass das Problem des (Schiffs-)Kompasses - wie gesagt - nur durch Kombination von (Translations-)Beschleunigung einerseits und Inklination andererseits entsteht. Am magnetischen Äquator, wo das Erdfeld horizontal liegt, entsteht es nicht. Dort entstünde durch Fehler bei der Lotbestimmung nur ein so genannter Kosinusfehler (proportional zum Quadrat der Lotabweichung).

Entsprechendes gilt nun, wenn als Kursreferenz ein anderes waagerechtes Feld, nämlich das Magnetfeld einer Funk- oder Radiowelle benutzt wird, wie im Rahmen der Erfindung vorgeschlagen. Das Antennenkreuz des Funkpeilers braucht dabei nur ungefähr in der Waagerechten zu liegen. Ein Peilfehler von 1 ° kann erst durch eine Krängung (Rollwinkel) von 25° verursacht werden, die nur selten vorkommt. Demgegenüber genügt (bei einer Inklination von 65°) schon ein Lotfehler von 0,4° für einen entsprechenden (Magnet-)Kompassfehler.

Die erfindungsgemäße Navigationseinrichtung kann sowohl dazu verwendet werden, nur das Azimut einer Hauptachse des Objekts zu bestimmen, beispielsweise den Steuerkurs eines Schiffes oder die Blickrichtung einer Kamera, als auch dazu, die horizontale Ebene, d.h. die Geoid-Tangentialebene zu ermitteln, beispielsweise zur Anzeige als künstlicher Horizont in Luftfahrzeugen. Eine wegen möglicher kinematischer Beschleunigung fehleranfällige Bestimmung des Lotes aus dem Schwerefeld der Erde ist dazu nicht nötig. Während die bisher bekannten Magnetkompasse wegen der Inklination die Kenntnis des wahren Lotes zur Funktionsvoraussetzung haben, ist die erfindungsgemäße Navigationseinrichtung in der Lage, die azimutale Orientierung des Objekts ohne eine derartige Kenntnis zu ermitteln. Zusätzlich kann sie sogar die Richtung des wahren Lotes aus einer Messung ausschließlich elektromagnetischer Felder ermitteln.

Im einfachsten Fall wird hierzu erfindungsgemäß ein an sich bekannter azimutaler (zweidimensionaler) Funkpeiler realisiert, der aus dem Empfang mindestens einer Hochfrequenzwelle eine stabile Referenzrichtung liefert, die es ermöglicht, die Schwankungen der von einem an sich bekannten Magnetkompass angezeigten nordbezogenen Richtung in einer solchen Art zu glätten, dass tatsächliche Kursänderungen schnell und richtig angezeigt werden, die wechselnden, durch Beschleunigungen induzierten Störungen jedoch wirksam unterdrückt werden.

Gemäß einer weiteren Ausgestaltung der vorliegenden Erfindung weist die Navigationseinrichtung vorzugsweise zusätzlich eine Gleichfeld-Sensoranordnung zur Messung der Richtung des Erdmagnetfelds auf, wobei die erfindungsgemäße Navigationseinrichtung zur kombinierten Auswertung der Ergebnisse der Hochfrequenz- und der Gleichfeld-Messungen ausgebildet ist.

Ein dem Funkpeiler eigener Fehler, der so genannte Krängungsfehler, wird jedoch nicht automatisch vermieden. Er ist insbesondere bei Segelbooten von Bedeutung. Die relativ zur Decksebene des Schiffes, d.h. des Objekts fest montierte Antennenanordnung des Funkpeilers misst die Projektion der Hochfrequenzfelder auf diese Decksebene. Die Querschiffskomponente des Hochfrequenzfeldes wird dabei um den Faktor Kosinus (K) mit K als Krängungswinkel verkleinert gemessen. Nachdem es sich nur um einen Kosinusfehler handelt, kann dieser in vielen Fällen vernachlässigt und anderenfalls durch die Berücksichtigung einer relativ groben Neigungsmessung mittels eines im Rahmen einer Ausgestaltung der erfindungsgemäßen Navigationseinrichtung vorgesehenen Neigungssensors hinreichend gut kompensiert werden.

In einer anderen Ausführungsform der erfindungsgemäßen Navigationseinrichtung, die zusätzlich über Kenntnis der Ortsposition des Objekts sowie der Standorte der Funksender verfügt, kann auch ohne einen Magnetkompass eine stabile nordbezogene Kursrichtung ermittelt werden. Die Standorte der Funksender können unter Bezugnahme auf deren charakteristische Frequenz einer Tabelle entnommen werden, was ggf. automatisch geschieht. Bei Empfang von mindestens drei Funksendern kann dabei die Ortsposition des Objekts aus den Senderstandorten und den gepeilten Winkeln bestimmt werden (Rückwärtseinschnitt). Fast immer wird die Ortsposition des Objekts aber auch aus einem Satellitennavigationsgerät bekannt sein. Für diese reine Azimutbestimmung ist eine Kenntnis des Lotes nicht erforderlich.

Vorteilhaft ist es daher, wenn die erfindungsgemäße Navigationseinrichtung in Weiterbildung eine Satellitenortungseinheit zur Ermittlung der aktuellen Ortsposition des Objekts aufweist und die Ermittlung der Orientierung weiterhin unter Einbeziehung der somit bekannten Ortsposition des Objekts erfolgt.

In einer weiteren Ausführungsform kann die erfindungsgemäße Navigationseinrichtung gerade dazu ausgebildet sein, die Abweichung der Hochachse des Objekts vom wahren Lot zum Erdmittelpunkt zu bestimmen. Beispielsweise können zur Anzeige im künstlichen Horizont der Rollwinkel und der Nickwinkel eines Flugzeuges ermittelt werden, ohne dass die azimutalen Richtungen vom Flugzeug zu den Funksendern bekannt sein müssen. Dazu ist die Navigationseinrichtung vorzugsweise mit einer dreidimensionalen Hochfrequenzfeld-Sondenanordnung ausgestattet, welche die Messung der räumlichen Richtungen der magnetischen Hochfrequenzfelder ermöglicht, welche bei Langwellen, die sich als Bodenwellen ausbreiten, in der Geoid-Tangentialebene liegen. Das Lot auf diese Ebene entspricht somit dem nicht durch translatorische Beschleunigungen verfälschten ("wahren") Lot zum Erdmittelpunkt.

Bei geeigneter Auswertung der Messergebnisse ist es ohne weiteres möglich, gleichzeitig sowohl die azimutale Richtung wie auch die Richtung des Lotes allein aus den Peilungen mit einem dreidimensionalen Funkpeiler und den bekannten Ortspositionen der angepeilten Funksender zu ermitteln. Damit kann eine Navigationseinrichtung zur Bestimmung der vollständigen Orientierung des Objekts ausschließlich anhand von elektromagnetischen Feldern realisiert werden, die einen Kompass und einen künstlichen Horizont in sich vereint.

Dabei wird neben der Tatsache, dass die Hochfrequenzfelder waagerecht gerichtet sind, auch die Kenntnis der azimutalen Richtung der Hochfrequenzfelder ausgenutzt. Diese kann aus der Kenntnis der Ortspositionen der Funksender und der Ortsposition des Objekts hergeleitet werden, wobei letztere sich beispielsweise durch nordbezogene Kreuzpeilung oder Anpeilung von mindestens drei Funksendern und/oder durch Satellitenortung bestimmen lässt. Damit sind die im Objekt-Bezugssystem gemessenen Feldrichtungen auch im geodätischen Bezugssystem bekannt, sodass bei entsprechender Weiterbildung der erfindungsgemäßen Navigationseinrichtung nicht nur ein künstlicher Horizont, sondern gleichzeitig auch ein Kompass realisiert werden kann.

Dies setzt allerdings den fast gleichzeitigen Empfang der Hochfrequenzwellen mehrerer Funksender voraus. Für den Fall, dass dies in zumindest Teilen des vorgesehenen Einsatzgebietes nicht möglich ist, besteht eine weitere nützliche Ausführungsform der erfindungsgemäßen Navigationseinrichtung darin, dass neben der (dreidimensionalen) Hochfrequenz-Sonde auch eine dreidimensionale Gleichfeldsonde zur Messung der Richtung des Erdmagnetfeldes verwendet wird. Damit ist auch bei Empfang nur eines Hochfrequenz-Funksenders die Bestimmung der vollständigen Orientierung möglich, falls der lokal gültige Wert der Inklination bekannt ist, der wiederum leicht einer in der Navigationseinrichtung abgelegten Tabelle entnommen werden kann.

Zur automatischen Funkpeilung wird üblicherweise die Richtung der Empfangskeule der Hochfrequenzfeld-Sondenanordnung moduliert und die empfangene Feldstärke synchron demoduliert. Bei Peilung einer unmodulierten Strahlung kann die Empfangskeule elektronisch oder mechanisch so gedreht werden, dass ein maximaler Empfang erzielt wird. Um diese Richtung herum wird dann die Empfangskeule moduliert, um das genaue Maximum zu finden. Bei erfindungsgemäß möglicher Anpeilung speziell eines Rundfunksenders mit Nutzmodulation führt die mit der Keulenmodulation synchrone Demodulation zu gelegentlichen Schwankungen der ermittelten Richtung, wenn das Rundfunkprogramm zufällig eine Modulation sendet, die mit der Modulation der Empfangskeule korreliert.

Zur Minimierung dieser Störungen ist es vorteilhaft, wenn in Weiterbildung der vorliegenden Erfindung die Modulation der Richtung der Empfangskeule mit einem (Quasi-)Zufallscode-Signal erfolgt, das eine minimale Korrelation mit der Musik- oder Sprachmodulation (Nutzmodulation) des Rundfunkprogramms aufweist.

Eine andere Methode zur Unterdrückung der o.g. Störung besteht darin, die Modulation mit ±90° um die Hauptempfangsrichtung herum auszuführen. Die ±90°-Modulation richtet die Empfindlichkeit der Sondenanordnung in Richtungen, in denen bei genau eingeregelter Richtung kein Feld empfangen wird. Die bei Richtungsabweichung trotzdem empfangenen Signale werden zur Korrektur der Richtungserwartung genutzt. Dies führt zur Unterdrückung des Signalträgers und damit gegebenenfalls auch seiner Nutzmodulation.

Die erfindungsgemäße Navigationseinrichtung hat im Rahmen einer weiteren Ausgestaltung vorzugsweise eine Anzeigeeinheit zur Darstellung der ermittelten Orientierung, vorzugsweise als Kompass-Anzeige und/oder als künstlicher Horizont. Die Navigationseinrichtung kann zusätzlich oder optional auch zur Verbindung mit einer Steuereinrichtung oder Lageregelung eines Objekts, insbesondere eines Wasser- oder Luftfahrzeuges, vorgesehen sein, wobei die ermittelte Orientierung als Bezugssignal für die Steuerung oder Lageregelung des Objekts dient.

Weitere vorteilhafte Ausgestaltungen der vorliegenden Erfindung ergeben sich aus den Unteransprüchen, deren Wortlaut hiermit durch Bezugnahme mit in die Beschreibung aufgenommen wird, um unnötige Textwiederholungen zu vermeiden.

Die Erfindung wird nachfolgend anhand der beigefügten Zeichnungen beispielhaft näher erläutert. Es zeigt:
- Fig. 1: eine schematische Darstellung einer erfindungsgemäßen Navigationseinrichtung mit Hochfrequenzfeld-Sondenanordnung und Gleichfeld-Sensoranordnung in einem Segelboot;
- Fig. 2: ein Ablaufdiagramm einer Ausgestaltung des erfindungsgemäßen Verfahrens; und
- Fig. 3: eine schematische Darstellung zur Erläuterung der Ausrichtung magnetischer Hochfrequenzfelder und der Richtung des Erdmagnetfelds mit Inklination und Missweisung der Nordrichtung durch Abweichung des scheinbaren Lots vom wahren Lot zum Erdmittelpunkt.

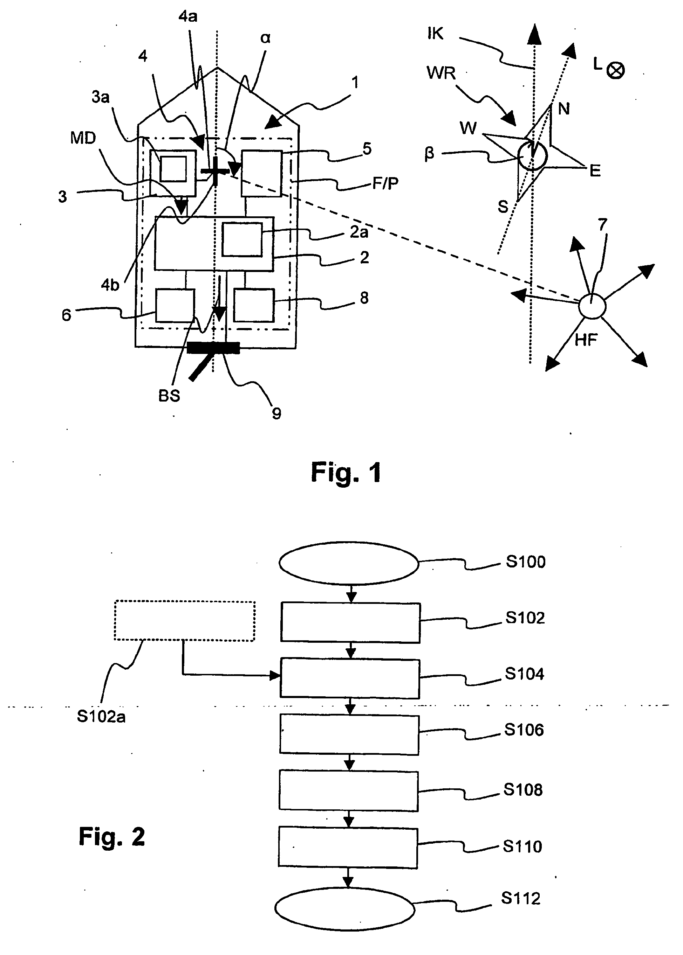

**Fig. 1** zeigt eine eine schematische Darstellung einer erfindungsgemäßen Navigationseinrichtung **1** in einem Segelboot **F/P** als exemplarische Ausführungsform eines Objekts oder einer Plattform in Form eines Wasserfahrzeugs. Das Objekt F/P besitzt eine ausgezeichnete Achse **A**, bei der es sich vorliegend um die Bugachse oder Bugrichtung des Segelbootes handelt. Die Navigationseinrichtung 1 weist zunächst eine Rechen- und Steuerungseinheit 2 sowie einen Funkpeiler **3** mit einer Hochfrequenzfeld-Sondenanordnung **4** auf, der mit dem Funkpeiler 3 in signaltechnischer Wirkverbindung steht. Die Hochfrequenzfeld-Sondenanordnung 4 weist zwei oder optional drei (nicht gezeigt) vorzugsweise senkrecht zueinander stehende und ein kartesisches Koordinatensystem aufspannende Ferrit-Stabantennen **4a**, **4b** auf, bei denen Ferritstäbe mit einer Drahtwicklung senkrecht zueinander stehen und sich in Richtung eines gemeinsamen Kreuzungspunktes erstrecken. Die Hochfrequenzfeld-Sondenanordnung 4 ist damit äquivalent zu einer zwei- oder dreiachsigen Rahmenantenne ausgebildet. Beispielsweise kann ein herkömmlicher Kreuzrahmen mit zwei gekreuzten Rahmen bis zu 1 m² Rahmenfläche genutzt werden.

Die Rechen- und Steuerungseinheit 2 besitzt einen Mikroprozessor **2a**, der zur Durchführung der gesamten Ablaufsteuerung beim erfindungsgemäßen Betrieb der Navigationseinrichtung 1 und insbesondere zur Umrechnung ermittelter richtungsabhängiger Messdaten **MD** des Funkpeilers 3 zwischen einem objekt- oder fahrzeugfesten Bezugssystem und einem erdfesten oder geodätischen Bezugsystem eingerichtet ist, worauf weiter unten noch genauer eingegangen wird.

Der Funkpeiler 3 weist gemäß dem dargestellten Ausführungsbeispiel eine Modulationseinheit **3a** zur Modulation einer Empfangskeule (nicht gezeigt) der Hochfrequenzfeld-Sondenanordnung 4 auf. Die Modulationseinheit 3a ist zur Modulation der Empfangskeule mit einem Zufallscodesignal ausgebildet, welches entweder von der Rechen- und Steuerungseinheit 2 oder von einem (nicht gezeigten) gesonderten Zufallscode-Signalerzeuger bereit gestellt werden kann.

Weiterhin weist die Navigationseinrichtung 1 gemäß der in Fig. 1 gezeigten Ausführungsform eine Magnetfeld-Sensoranordnung **5** mit (nicht explizit dargestellten) Gleichfeldsonden (beispielsweise Fluxgate-Sonden) auf.

Weiterhin ist ein in Fig. 1 dargestellter optionaler Neigungssensor **6** signaltechnisch mit der Rechen- und Steuerungseinheit 2 verbunden, um den Neigungswinkel des Fahrzeuges F/P zu bestimmen und den durch die Krängung verursachten Kosinusfehler bei der Projektion der gemessenen Hochfrequenzfelder auf die (Decks-)Ebene des Fahrzeugs, zu der die Sonden 4, 5 in vorzugsweise paralleler Anordnung montiert sind, in Abhängigkeit von dem Neigungswinkel zu korrigieren.

Im Zuge der gezeigten Ausgestaltung der erfindungsgemäßen Navigationseinrichtung 1 weist diese weiterhin eine mit der Rechen- und Steuerungseinheit 2 in Verbindung stehende Anzeigeeinheit **8** zur Darstellung des (Ist-)Kurses **IK** des Fahrzeugs oder dessen Abweichung von einem Sollkurs auf. Die Anzeigeeinheit 8 kann alternativ aber auch einen künstlichen Horizont darstellen, beispielsweise wenn die Navigationseinrichtung 1 in einem Luftfahrzeug (nicht gezeigt) eingesetzt ist. Die Anzeigeeinheit 8 kann beispielsweise als 360°-fähiges Drehmagnetinstrument ausgebildet oder lediglich in Form eines Grafik-Displays ausgeführt sein, das durch die Rechen- und Steuerungseinheit 2 ansteuerbar ist und mit dem eine für den jeweiligen Einsatz der erfindungsgemäßen Navigationseinrichtung 1 geeignete Anzeige generierbar ist.

Darüber hinaus ist die Navigationseinrichtung 1 gemäß der beispielhaften Ausgestaltung in Fig. 1 über die Rechen- und Steuerungseinheit 2 mit einer Selbststeueranlage oder Lageregelung **9** des Fahrzeugs F/P verbunden.

Schematisch dargestellt ist in Fig. 1 mittels einer Windrose **WR**, welche die Himmelsrichtungen Nord (N), Ost (E), Süd (S) und West (W) anzeigt, weiterhin ein geodätisches Bezugs- oder Koordinatensystem. Die Vertikale, d.h. das Lot L erstreckt sich senkrecht zur Blatt- oder Zeichenebene der Fig. 1 und in diese hinein.

Mit dem Funkpeiler 3 wird eine Einfallsrichtung α der vom wenigstens einem Funksender **7** ausgestrahlten Hochfrequenzwellen **HF** gepeilt, indem die magnetische Feldrichtung der Hochfrequenzwellen HF relativ zu einer objekt- bzw. fahrzeugfesten Achse, beispielsweise der Bugrichtung A, bestimmt wird.

Der Empfang mehrerer - beispielsweise durch ihre Frequenz unterschiedener - Felder ermöglicht die Bestimmung der durch die magnetischen HF-Felder ausgespannten horizontalen Ebene, welche in Fig. 1 der Zeichen- oder Blattebene entspricht. Dazu werden - wie nachfolgend noch genauer beschrieben ist - durch die Navigationseinrichtung 1 die Richtungen der magnetischen Hochfrequenzfelder HF gemessen, die insbesondere bei den sich als Bodenwellen ausbreitenden Lang- und Mittelwellen waagerecht zur Erdoberfläche liegen, also im Gegensatz zum geomagnetischen Feld keine Inklination aufweisen.

Dabei werden erfindungsgemäß die folgenden Schritte mittels der vorstehend unter Bezugnahme auf die Fig. 1 beschriebenen Navigationseinrichtung 1 ausgeführt, was in der Fig. 2 dargestellt ist:

**Fig. 2** zeigt ein Ablaufdiagramm einer Ausgestaltung des erfindungsgemäßen Verfahrens. Nach Verfahrensbeginn in Schritt **S100** wird zunächst mittels des Funkpeilers 3 die Einfallsrichtung α einer von wenigstens einem Funksender 7 ausgestrahlten Hochfrequenzwelle HF durch Ermitteln einer Feldrichtung der Hochfrequenzwelle HF relativ zu der ausgezeichneten objektfesten Achse A in Form von richtungsabhängigen Messdaten MD bestimmt (Schritt **S102**). Die so bestimmten richtungsabhängigen Messdaten MD werden anschließend in Schritt **S104** an die Rechen- und Steuerungseinheit 2 übertragen (siehe entsprechenden Pfeil MD in Fig. 1). Dort erfolgt in einem anschließenden Schritt **S106** ein Umrechnen der von dem Funkpeiler 3 gelieferten richtungsabhängigen Messdaten MD zwischen einem objekt- oder fahrzeugfesten und dem geodätischen Bezugssystem durch die Rechen- und Steuerungseinheit 2, die hierzu vorzugsweise softwaretechnisch eingerichtet ist, z.B. durch geeignete Programmierung des Mikroprozessors 2a. Zusätzlich oder alternativ kann die Rechen- und Steuerungseinheit 2 auch hardwaretechnisch entsprechend ausgebildet sein, was dem Fachmann geläufig ist. Aus der beschriebenen Messdatenumrechnung wird dann in Schritt **S108** erfindungsgemäß eine (azimutale) Winkellage der Achse A in dem geodätischen Bezugssystem rechnerisch durch die Rechen- und Steuerungseinheit 2 bestimmt, wie oben bereits detailliert erläutert, und ggf. mittels der Anzeigeeinheit 8 zur Anzeige gebracht (Schritt **S110**). Die (azimutale) Winkellage der Achse A in dem geodätischen Bezugssystem, d.h. bezogen auf die Nordrichtung N ist in Fig. 1 mit β bezeichnet. Sie gibt im Wesentlichen den (ist-)Kurs IK des Fahrzeugs F/P oder dessen Abweichung von einem Sollkurs an.

Die auf diese Weise mit Hilfe der magnetischen Hochfrequenzfelder HF hochgenau und unabhängig von (Translations-)Beschleunigungen ermittelte Orientierung des Fahrzeugs F/P kann darüber hinaus insbesondere als ein Bezugssignal BS für die Selbststeueranlage / Lageregelung 9 dienen.

Das erfindungsgemäße Verfahren in seiner Ausgestaltung nach Fig. 2 endet mit dem abschließenden Schritt **S112**. Optional können im Anschluss und/oder parallel zu Schritt S102 in einem gestrichelt angedeuteten Schritt **S102a** noch weitere richtungsabhängige Messdaten bestimmt und zu Umrechnungszwecken an die Rechen- und Steuerungseinheit 2 übermittelt werden, insbesondere weitere Feldrichtungen von Hochfrequenzwellen HF relativ zu der ausgezeichneten objektfesten Achse A und/oder Gleichfeldmessungen des Erdmagnetfelds, wie an anderen Stellen dieses Dokuments ausführlich beschrieben ist.

Bei erneuter Bezugnahme auf die Fig. 1 kann auf diese Weise erfindungsgemäß mit der Navigationseinrichtung 1 bzw. der Rechen- und Steuerungseinheit 2 sowohl die azimutale Orientierung β, d.h. näherungsweise (bis auf z.B. eine Abdrift) der Ist-Kurs IK des Fahrzeugs F/P als auch optional das Lot L auf die horizontale Ebene (die Bildebene) als Lotrechte zum Erdmittelpunkt, d.h. die Geoid-Normale bestimmt werden. Dieses ("wahre") Lot L kann dann von der Rechen- und Steuerungseinheit 2 zur Bestimmung der Winkellage des Fahrzeugs F/P in Bezug auf den durch die horizontale Ebene bekannten Horizont oder zur Projektion der Erdmagnetfeld-Richtung auf die Horizontalebene genutzt werden, wobei die Erdmagnetfeld-Richtung mit Hilfe der Magnetfeld-Sensoranordnung 5 ermittelt wird und ebenfalls an die Rechen- und Steuerungseinheit 2 übertragen wird

Neben dem auf die Nordrichtung N bezogenen aktuellen Kurs IK kann, insbesondere in Flugzeugen, auch der auf das wahre Lot L bezogene aktuelle Rollwinkel sowie der Nickwinkel mit der Navigationseinrichtung 1 durch die Rechen- und Steuerungseinheit 2 ermittelt und als Bezugssignal BS an die Selbststeueranlage / Lageregelung 9 weitergeleitet und ggf. auf der Anzeigeeinheit 8 angezeigt werden, was in Fig. 1 jedoch nicht explizit dargestellt ist.

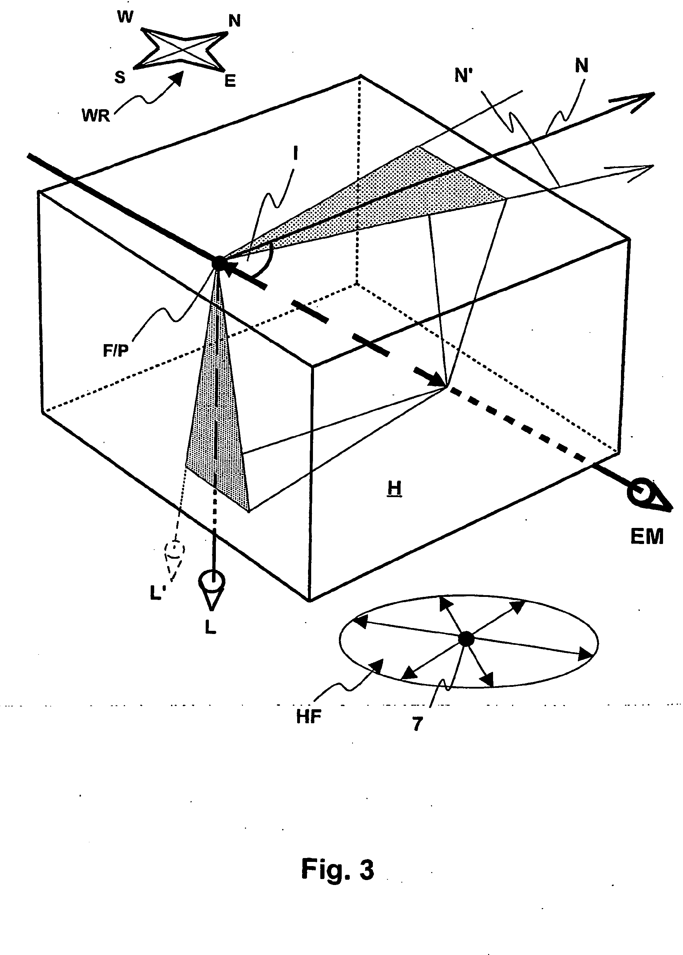

Die **Fig. 3** zeigt eine schematische Darstellung zur Erläuterung der Ausrichtung der magnetischen Hochfrequenzfelder HF und der Richtung des Erdmagnetfelds **EM.** Dabei sind in Fig. 3 bereits anhand der Fig. 1 und 2 erläuterte Zeichnungsbestandteile mit denselben Bezugszeichen versehen. Das Erdmagnetfeld EM weist gemäß Fig. 3 abhängig vom geografischen Ort eine Inklination **I** gegenüber der horizontalen Ebene **H** auf, die zu einer fehlweisenden Nordrichtung **N'** durch Abweichung des scheinbaren Lots L' vom wahren Lot L zum Erdmittelpunkt führt.

Die mit der Magnetfeld-Sensoranordnung 5 (Fig. 1) gemessene Richtung des Erdmagnetfelds EM gemäß Fig. 3 müsste nun zur Ermittlung der wahren Nordrichtung N mit Hilfe des wahren Lots L zum Erdmittelpunkt auf die horizontale Ebene H projiziert werden. Tatsächlich wird aber das Lot L normalerweise aus der Richtung der Gravitationsbeschleunigung (nicht gezeigt) bestimmt. Dabei werden jedoch auch die kinematischen bzw. translatorischen (Horizontal-)Beschleunigungen des Fahrzeuges F/P (Fig. 1) mit erfasst, die beispielsweise beim Anfahren, Bremsen, bei Kurvenfahrten und Kurvenflug oder durch Seegang auftreten. Es ist erkennbar, dass ein solchermaßen vom wahren Lot L abweichendes scheinbares Lot L' zu der bereits erwähnten fehlweisenden Nordrichtung N' führt, deren Abweichung von der wahren Nordrichtung N mit wachsender Inklination größer wird. Dabei gehört zu jedem spezifischen scheinbaren Lot L' genau eine fehlweisende Nordrichtung N', wobei L' und N' in den jeweils schraffierten Schwankungs- oder Abweichungsbereichen liegen.

Die Winkellage in der horizontalen Ebene (d.h. die azimutale Orientierung) und ggf. die Lotrechte auf die horizontale Ebene H als wahres Lot L wird daher bei der Navigationseinrichtung 1 mit Hilfe von magnetischen Hochfrequenzfeldern HF gemessen, die sich waagerecht zur Erdoberfläche ausbreiten. Aufgrund der waagerechten Ausrichtung der HF-Felder führen Winkelfehler bei der Bestimmung der Lotrichtung zu keiner inklinationsbedingten Missweisung.

Durch nahezu gleichzeitige Peilung der HF-Felder mehrerer Funksender, insbesondere Lang- oder Mittelwellensender, kann das Lot oder die Lotrechte L unabhängig von kinematischen Beschleunigungen bestimmt werden.

Wenn die geodätische Richtung der Verbindungslinie (gestrichelte Linie in Fig. 1) zwischen dem Fahrzeug F/P und dem Funksender 7 bekannt ist, lässt sich auch der Ist-Kurs IK bestimmen, ohne dass die Nordrichtung N aus dem Erdmagnetfeld EM ermittelt werden müsste. Die geodätische Richtung der Verbindungslinie vom Fahrzeug F/P zum Funksender 7 kann aus dem mittels Satellitennavigation bekannten eigenen Standort und dem einer (beispielsweise in der Rechen- und Steuerungseinheit 2 bzw. einem entsprechenden Speichermittel (nicht gezeigt) hinterlegten) Tabelle entnommenen Standort des angepeilten Funksenders 7 automatisch berechnet werden. Dazu weist die Navigationseinrichtung 1 zusätzlich zu der in Fig. 1 gezeigten Ausgestaltung noch ein (nicht gezeigtes) Satellitenortungseinheit bzw. einen entsprechenden Satellitenempfänger auf, was dem Fachmann an sich bekannt ist. Alternativ lässt sich die azimutale Orientierung β des Objekts F/P jedoch auch durch Peilung eines einzigen Funksenders 7, z.B. eines Radiosenders, und Messung der Richtung des Erdmagnetfeldes EM bestimmen.

Aus den Richtungen zweier Felder, die einerseits im geodätischen System bekannt sind und andererseits im Plattformsystem gemessen werden, kann die vollständige Transformation, d.h. die Drehmatrix oder den Drehungstensor und damit die vollständige Orientierung abgeleitet, angezeigt und/oder zur Steuerung verwendet werden, wie weiter oben ausführlich erläutert. Die vollständige Orientierung umfasst dabei neben der Lage zum Horizont auch die Kompassrichtung.

Wenn als Funksender Rundfunksender mit Nutzmodulation angepeilt werden, können eventuelle Störungen durch diese Modulation dadurch reduziert werden, dass die Empfangskeule durch die Modulationseinheit 3a (Fig. 1) mit einem Quasi-Zufallscode moduliert wird, der eine minimale Korrelation mit der Musik- oder Sprachmodulation des Rundfunkprogramms aufweist. Herkömmliche automatische Funkpeiler 3 gemäß Fig. 1 verwenden zur (Vorwärts-/Rückwärts-)Seitenbestimmung eine Hilfsantenne, die das elektrische Hochfrequenzfeld aufnimmt, und addieren das elektrische Hochfrequenzsignal zum Magnetfeldsignal. Die gesamte Empfangskeule weist dann ein eindeutiges Maximum auf, um das herum die Modulation erfolgt. Bei einem geeigneten Mischverhältnis reduziert die Verwendung des Quasi-Zufallscodes (Pseudo Random Noise - PRN) für die Modulation der Empfangskeule ausreichend die Interferenz, die durch eine Modulation des Rundfunkprogramms verursacht werden könnte, welche mit der Keulenmodulation korreliert.

Die Empfangskeule kann aber auch mit ±90° um die Hauptempfangsrichtung herum moduliert werden. Bei symmetrischer Modulation und fehlendem Hilfsantennensignal führt dies zu einer vollständigen Unterdrückung des Trägers und damit auch seiner Nutzmodulation.

### Bezugszeichenliste

- A: Achse
- α: Einfallsrichtung
- β: azimutale Winkellage
- BS: Bezugssignal
- EM: Erdmagnetfeld
- F/P: Objekt, Fahrzeug, Plattform
- H: Horizontalebene
- HF: Hochfrequenzfelder
- IK: Ist-Kurs
- L: wahres Lot
- L': scheinbares Lot
- MD: richtungsabhängige Messdaten
- N: wahre Nordrichtung
- N': fehlweisende Nordrichtung
- WR: Windrose
- 1: Navigationseinrichtung
- 2: Rechen- und Steuerungseinheit
- 2a: Mikroprozessor
- 3: Funkpeiler
- 3a: Modulationseinheit
- 4: Hochfrequenzfeld-Sondenanordnung
- 4a: Ferrit-Stabantenne
- 4b: Ferrit-Stabantenne
- 5: Magnetfeld-Sensoranordnung
- 6: Neigungssensor
- 7: Funksender
- 8: Anzeigeeinheit
- 9: Selbststeueranlage, Lageregelung

## Patentansprüche

1. Navigationseinrichtung (1) für ein Objekt (F/P), insbesondere ein Flugzeug, Land- oder Wasserfahrzeug, welche aufweist:
- einen Funkpeiler (3) mit einer Hochfrequenzfeld-Sondenanordnung (4) zum Anpeilen von Funksendern (7), die Hochfrequenzwellen (HF) ausstrahlen, welcher zum Bestimmen der Einfallsrichtung (α) der von wenigstens einem Funksender (7) ausgestrahlten Hochfrequenzwelle (HF) durch Ermittlung einer Feldrichtung der Hochfrequenzwelle relativ zu einer ausgezeichneten objektfesten Achse (A) ausgebildet ist,
- eine Magnetfeld-Sensoranordnung (5) zur Bestimmung einer Richtung des Erdmagnetfelds (EM), welche in Abhängigkeit von der Inklination des Erdmagnetfelds eine durch kinematische Beschleunigungen des Objekts (F/P) gestörte Richtungsinformation (N') liefert,
- eine Rechen- und Steuerungseinheit (2), welche zur kombinierten Auswertung von Ausgangssignalen der Hochfrequenzfeld-Sondenanordnung (4) und der Magnetfeld-Sensoranordnung (5) ausgebildet ist, und
- eine Anzeigeeinheit (8) und/oder eine signaltechnische Verbindung mit einer Steuereinrichtung/Lageregelung (9) des Objekts (F/P),
**dadurch gekennzeichnet, dass**
die Navigationseinrichtung (1) zur Kombination der durch kinematische Beschleunigungen des Objekts (F/P) und die Inklination (I) des Erdmagnetfelds (EM) gestörten Richtungsinformation (N') mit der gegenüber kinematischen Beschleunigungen des Objekts (F/P) unempfindlichen Peilungsinformation des Funkpeilers (3) derart ausgebildet ist, dass eine bezüglich der Störungen gedämpfte, den tatsächlichen Änderungen der Orientierung einer Achse (A) des Objekts (F/P) hinreichend schnell folgende Richtungsinformation lieferbar ist, dass die Navigationseinrichtung (1) eine Anzeigeeinheit (8) zur Darstellung der ermittelten Richtungsinformation, vorzugsweise als Anzeige eines Kurses (IK) des Objekts (F/P) oder als künstlicher Horizont, aufweist, und dass die Navigationseinrichtung (1) mit einer Steuereinrichtung / Lageregelung (9) des Objekts (F/P) signaltechnisch verbunden ist, wobei optional die ermittelte Richtungsinformation als Bezugssignal (BS) für die Steuereinrichtung / Lageregelung (9) vorgesehen ist.

2. Navigationseinrichtung (1) nach Anspruch 1, **dadurch gekennzeichnet, dass** die Navigationseinrichtung (1) zur annähernd gleichzeitigen Messung der Richtungen von mindestens zwei Hochfrequenzfeldern (HF) oder Gleichfeldern ausgebildet ist.

3. Navigationseinrichtung (1) nach einem der vorhergehenden Ansprüche, **dadurch gekennzeichnet, dass** die Navigationseinrichtung (1) eine Satellitenortungseinheit zur Ermittlung einer aktuellen Ortsposition des Objekts (F/P) aufweist, wobei die Navigationseinrichtung (1) weiterhin zur Ermittlung der Orientierung unter Berücksichtigung der Ortsposition des Objekts (F/P) ausgebildet ist.

4. Navigationseinrichtung (1) nach einem der vorhergehenden Ansprüche, **dadurch gekennzeichnet, dass** die Navigationseinrichtung (1) einen Neigungssensor (6) zur Bestimmung eines Neigungswinkels der Hochfrequenzfeld-Sondenanordnung (4) aufweist und dass die Navigationseinrichtung (1) zur Korrektur von Messergebnissen des Funkpeilers (3) in Abhängigkeit von dem Neigungswinkel ausgebildet ist.

5. Navigationseinrichtung (1) nach einem der vorhergehenden Ansprüche, **dadurch gekennzeichnet, dass** der Funkpeiler (3) eine Modulationseinheit (3a) zur Modulation einer Empfangskeule der Hochfrequenzfeld-Sondenanordnung (4) aufweist.

6. Navigationseinrichtung (1) nach Anspruch 5, **dadurch gekennzeichnet, dass** die Modulationseinheit (3a) zur Modulation der Empfangskeule mit einem Zufallscodesignal ausgebildet ist.

7. Navigationseinrichtung (1) nach Anspruch 5 oder 6, **dadurch gekennzeichnet, dass** der Funkpeiler (3) die Richtung der Empfangskeule der Hochfrequenzfeld-Sondenanordnung (4) mit ±90° um die Hauptempfangsrichtung herum moduliert und dadurch im eingeregelten Zustand kein Signal empfängt.

8. Verfahren zum Ermitteln der Orientierung oder Änderung der Orientierung mindestens einer Achse eines Objekts (F/P), beispielsweise eines Flugzeugs, Land- oder Wasserfahrzeugs, in einem geodätischen Bezugssystem, mit den Schritten:
- Bestimmen der Einfallsrichtung (α) der von wenigstens einem Funksender (7) ausgestrahlten Hochfrequenzwelle (HF) durch Ermittlung der Feldrichtung der Hochfrequenzwelle relativ zu einer ausgezeichneten objektfesten Achse (A) mittels eines Funkpeilers (3) mit einer Hochfrequenzfeld-Sondenanordnung (4),
- Durchführen wenigstens einer Messung des Erdmagnetfelds (EM) mittels einer Magnetfeld-Sensoranordnung (5), welche in Abhängigkeit von der Inklination des Erdmagnetfelds eine durch kinematische Beschleunigungen des Objekts (F/P) gestörte Richtungsinformation (N') liefert, und
- kombiniertes Auswerten von Ausgangssignalen der Hochfrequenzfeld-Sondenanordnung (4) und der Richtungsinformation der Magnetfeld-Sensoranordnung (5) durch eine Rechen- und Steuereinheit (2),
**dadurch gekennzeichnet, dass**
die durch kinematische Beschleunigungen des Objekts (F/P) und die Inklination des Erdmagnetfelds hervorgerufenen Schwankungen der Richtungsinformation der Magnetfeld-Sensoranordnung (5) durch die kombinierte Auswertung bezüglich der Störungen gedämpft werden, so dass eine den tatsächlichen Änderungen der Orientierung einer Achse (A) des Objekts (F/P) hinreichend schnell folgende Richtungsinformation geliefert wird,
und dass die gelieferte Richtungsinformation mittels einer Anzeigeeinheit (8) angezeigt und/oder als Bezugssignal (BS) an eine Steuereinrichtung / Lageregelung (9) für das Objekt (F/P) weitergeleitet wird.

## Claims

1. Navigation device (1) for an object (F/P), especially an aircraft, land vehicle or water craft, having:
- a radio direction finder (3) having a high-frequency field probe arrangement (4) for taking bearings on radio transmitters (7) that emit high-frequency waves (HF), which radio direction finder is arranged to determine the direction of incidence (α) of the high-frequency wave (HF) emitted by at least one radio transmitter (7) by detecting a field direction of the high-frequency wave relative to a marked object-fixed axis (A),
- a magnetic field sensor arrangement (5) for determining a direction of the earth's magnetic field (EM) which, in dependence upon the inclination of the earth's magnetic field, supplies directional information (N') disturbed by kinematic accelerations of the object (F/P),
- a computation and control unit (2) which is arranged for combined evaluation of output signals of the high-frequency field probe arrangement (4) and of the magnetic field sensor arrangement (5), and
- a display unit (8) and/or a signalling connection with a control device/position feedback controller (9) of the object (F/P),
**characterised in that**
the navigation device (1) is arranged to combine the directional information (N') disturbed by kinematic accelerations of the object (F/P) and by the inclination (I) of the earth's magnetic field (EM) with the bearing information of the radio direction finder (3) that is insensitive to kinematic accelerations of the object (F/P) in such a way that directional information can be supplied which is damped in respect of the disturbances and which follows the actual changes in the orientation of an axis (A) of the object (F/P) sufficiently quickly,
the navigation device (1) has a display unit (8) for displaying the directional information obtained, preferably as a display of a course (IK) of the object (F/P) or as an artificial horizon, and
the navigation device (1) is in signalling connection with a control device/position feedback controller (9) of the object (F/P), the directional information obtained optionally being provided as reference signal (BS) for the control device/position feedback controller (9).

2. Navigation device (1) according to claim 1, **characterised in that** the navigation device (1) is arranged for approximately simultaneous measurement of the directions of at least two high-frequency fields (HF) or constant fields.

3. Navigation device (1) according to any one of the preceding claims, **characterised in that** the navigation device (1) has a satellite location unit for detecting an up-to-date location of the object (F/P), the navigation device (1) further being arranged to detect the orientation taking into account the location of the object (F/P).

4. Navigation device (1) according to any one of the preceding claims, **characterised in that** the navigation device (1) has an inclination sensor (6) for determining an angle of inclination of the high-frequency field probe arrangement (4), and the navigation device (1) is arranged to correct measured results of the radio direction finder (3) in dependence upon the angle of inclination.

5. Navigation device (1) according to any one of the preceding claims, **characterised in that** the radio direction finder (3) has a modulation unit (3a) for modulating a receiving lobe of the high-frequency field probe arrangement (4).

6. Navigation device (1) according to claim 5, **characterised in that** the modulation unit (3a) is arranged to modulate the receiving lobe with a random code signal.

7. Navigation device (1) according to claim 5 or 6, **characterised in that** the radio direction finder (3) modulates the direction of the receiving lobe of the high-frequency field probe arrangement (4) at ±90° around the main receiving direction and thus, in the adjusted state, does not receive a signal.

8. Method of detecting the orientation or change in the orientation of at least one axis of an object (F/P), for example an aircraft, land vehicle or water craft, in a geodetic reference system, having the steps:
- determination of the direction of incidence (α) of the high-frequency wave (HF) emitted by at least one radio transmitter (7) by detecting the field direction of the high-frequency wave relative to a marked object-fixed axis (A) by means of a radio direction finder (3) having a high-frequency field probe arrangement (4),
- performance of at least one measurement of the earth's magnetic field (EM) by means of a magnetic field sensor arrangement (5) which, in dependence upon the inclination of the earth's magnetic field, supplies directional information (N') disturbed by kinematic accelerations of the object (F/P), and
- combined evaluation of output signals of the high-frequency field probe arrangement (4) and of the directional information of the magnetic field sensor arrangement (5) by a computation and control unit (2),
**characterised in that**
the variations in the directional information of the magnetic field sensor arrangement (5) brought about by kinematic accelerations of the object (F/P) and by the inclination of the earth's magnetic field are damped in respect of the disturbances by the combined evaluation, so that directional information is supplied which follows the actual changes in the orientation of an axis (A) of the object (F/P) sufficiently quickly,
and the directional information supplied is displayed by means of a display unit (8) and/or forwarded as reference signal (BS) to a control device/position feedback controller (9) for the object (F/P).

## Revendications

1. Dispositif de navigation (1) destiné à un objet (F/P), en particulier à un aéronef, à un véhicule terrestre ou à une embarcation, ledit dispositif comprenant :
- une balise de radiorepérage (3) qui est munie d'un ensemble (4) de sondes à champ de haute fréquence, dévolu au balisage d'émetteurs radio (7) diffusant des ondes de haute fréquence (HF), et est conçue pour définir la direction d'incidence (α) de l'onde de haute fréquence (HF) diffusée par au moins un émetteur radio (7), par détermination d'une direction du champ de ladite onde de haute fréquence par rapport à un axe démarqué (A), faisant corps avec ledit objet,
- un ensemble (5) de capteurs de champs magnétiques, conçu pour définir une direction du champ magnétique terrestre (EM) et délivrant, en fonction de l'inclinaison dudit champ magnétique terrestre, une information directionnelle (N') perturbée par des accélérations cinématiques dudit objet (F/P),
- une unité (2) de calcul et de commande, dédiée à l'interprétation combinée de signaux de sortie dudit ensemble (4) de sondes à champ de haute fréquence et dudit ensemble (5) de capteurs de champs magnétiques, et
- une unité d'affichage (8) et/ou une connexion technique, par signaux, avec un système de commande/de réglage (9) des positions dudit objet (F/P),
**caractérisé par le fait**
**que** ledit dispositif de navigation (1) est réalisé en vue de la combinaison de l'information directionnelle (N'), perturbée par des accélérations cinématiques de l'objet (F/P) et par l'inclinaison (I) du champ magnétique terrestre (EM), avec l'information de balisage de la balise de radiorepérage (3) non affectée par des accélérations cinématiques dudit objet (F/P), de façon à pouvoir délivrer une information directionnelle dont les perturbations sont atténuées et qui succède, avec rapidité suffisante, aux variations effectives de l'orientation d'un axe (A) dudit objet (F/P),
**que** ledit dispositif de navigation (1) comporte une unité d'affichage (8) dédiée à la représentation de l'information directionnelle déterminée, de préférence en tant qu'affichage d'un cap (IK) dudit objet (F/P) ou en tant qu'horizon artificiel, et
**que** ledit dispositif de navigation (1) est techniquement connecté, par signaux, avec un système de commande/de réglage (9) des positions dudit objet (F/P), l'information directionnelle déterminée étant prévue, en option, en tant que signal de référence (BS) attribué audit système de commande/de réglage (9) des positions.

2. Dispositif de navigation (1) selon la revendication 1, **caractérisé par le fait que** ledit dispositif de navigation (1) est réalisé en vue de la mesure, approximativement concomitante, des directions d'au moins deux champs de haute fréquence (HF) ou champs continus.

3. Dispositif de navigation (1) selon l'une des revendications précédentes, **caractérisé par le fait que** ledit dispositif de navigation (1) comporte une unité de localisation satellitaire, conçue pour déterminer une position localisée instantanée de l'objet (F/P), ledit dispositif de navigation (1) étant réalisé, par ailleurs, en vue de déterminer l'orientation en prenant en compte ladite position localisée de l'objet (F/P).

4. Dispositif de navigation (1) selon l'une des revendications précédentes, **caractérisé par le fait que** ledit dispositif de navigation (1) comporte un détecteur d'inclinaisons (6), conçu pour définir un angle d'inclinaison de l'ensemble (4) de sondes à champ de haute fréquence ; et **par le fait que** ledit dispositif de navigation (1) est réalisé en vue de corriger des résultats de mesure de la balise de radiorepérage (3) en fonction dudit angle d'inclinaison.

5. Dispositif de navigation (1) selon l'une des revendications précédentes, **caractérisé par le fait que** la balise de radiorepérage (3) comporte une unité de modulation (3a), en vue de moduler un lobe de réception de l'ensemble (4) de sondes à champ de haute fréquence.

6. Dispositif de navigation (1) selon la revendication 5, **caractérisé par le fait que** l'unité de modulation (3a) est dotée d'un signal de codage aléatoire en vue de moduler le lobe de réception.

7. Dispositif de navigation (1) selon la revendication 5 ou 6, **caractérisé par le fait que** la balise de radiorepérage (3) module, à ± 90°, la direction du lobe de réception de l'ensemble (4) de sondes à champ de haute fréquence tout autour de la direction de réception principale, et ne reçoit ainsi aucun signal à l'état réglé.

8. Procédé de détermination, dans un système géodésique de référence, de l'orientation ou d'une variation de l'orientation d'au moins un axe d'un objet (F/P), par exemple d'un aéronef, d'un véhicule terrestre ou d'une embarcation, englobant les étapes consistant à :
- définir, au moyen d'une balise de radiorepérage (3) munie d'un ensemble (4) de sondes à champ de haute fréquence, la direction d'incidence (α) de l'onde de haute fréquence (HF) diffusée par au moins un émetteur radio (7), par détermination de la direction du champ de ladite onde de haute fréquence par rapport à un axe démarqué (A), faisant corps avec ledit objet,
- effectuer au moins une mesure du champ magnétique terrestre (EM) au moyen d'un ensemble (5) de capteurs de champs magnétiques qui délivre, en fonction de l'inclinaison dudit champ magnétique terrestre, une information directionnelle (N') perturbée par des accélérations cinématiques dudit objet (F/P), et
- opérer, à l'aide d'une unité (2) de calcul et de commande, une interprétation combinée de signaux de sortie de l'ensemble (4) de sondes à champ de haute fréquence et de l'information directionnelle de l'ensemble (5) de capteurs de champs magnétiques,
**caractérisé par le fait**
**que** les perturbations des fluctuations de l'information directionnelle de l'ensemble (5) de capteurs de champs magnétiques, provoquées par des accélérations cinématiques de l'objet (F/P) et par l'inclinaison du champ magnétique terrestre, sont atténuées par l'interprétation combinée, de façon à délivrer une information directionnelle qui succède, avec rapidité suffisante, aux variations effectives de l'orientation d'un axe (A) dudit objet (F/P),
et **que** ladite information directionnelle délivrée est visualisée au moyen d'une unité d'affichage (8) et/ou est transmise, en tant que signal de référence (BS), à un système de commande/de réglage (9) des positions dudit objet (F/P).
